# EUROPEAN PATENT SPECIFICATION

(11) **EP 0 471 510 B1**
(45) Date of publication and mention of the grant of the patent: **05.04.1995**
(21) Application number: 91307303.7
(22) Date of filing: 08.08.1991
(51) Int. Cl.: G21C 19/02

(54) **Centering tool for use in refueling water cooled nuclear fission reactors**
Zentriervorrichtung zur Verwendung während des Austausches der Brennelemente von wassergekühlten Kernreaktoren
Dispositif de centrage à utiliser pour la recharge en combustible des réacteurs nucléaires refroidis à l'eau

(30) Priority: 17.08.1990 US 568965
(43) Date of publication of application: 19.02.1992
(73) Proprietor: GENERAL ELECTRIC COMPANY, Schenectady, NY 12345 (US)
(72) Inventor: Lee, Kent Tsz, San Leandro, CA 94579 (US); Izzo, Kenneth Roy, San Jose, CA 95125 (US)
(74) Representative: Pratt, Richard Wilson

(56) References cited:
- DE-A- 2 909 793
- DE-A- 3 027 562

## Description

### FIELD OF THE INVENTION

This invention comprises a tool for facilitating the refueling process in a water moderated and cooled nuclear fission reactor. The invention relates to servicing nuclear reactor fuel cores of the type shown in U.S. Letters Patent No. 4,285,769, issued August 25, 1981, and related nuclear fuel systems.

### BACKGROUND OF THE INVENTION

Water moderated and cooled nuclear fission reactors, in particular so-called boiling water nuclear reactors, comprise fuel core systems such as described in the aforesaid U.S. Patent No. 4,285,769. Specifically, the fissionable fuel, typically consisting of an oxide of uranium, plutonium and/or thorium, in the form of small cylindrical pellets, is sealed within long tubular containers. A number of these fuel enclosing tube containers, such as for example 64 in a 8 by 8 array including several open ended empty tubes for water passage, are assembled together into a bundle of spaced apart fuel containers. The fuel containing tubes secured together along their length are surrounded within an open ended channel of square cross-section. The fuel bundles, comprising an apt number of long fuel retaining sealed tubular containers within a surrounding channel, are assembled in specific patterns within the fuel core housed in a nuclear reactor pressure vessel. The bundles are each provided with a supporting lower end nose piece and secured in the fuel core with the lower end nose pieced socketed into a core support plate structure, and the upper end is positioned by extending through an upper core grid.

Generally the aforesaid fuel bundle units are assembled in the fuel core of boiling water nuclear reactors in a pattern of four symmetrically arranged units, forming a square, providing a cell. The four vertical fuel bundle units are spaced apart sufficiently to enable a control rod having a cruciform or cross-shaped blade of four wings, each extending outward at about 90 degrees to the adjacent blade, to move upward from below the fuel core and pass between the fuel bundle units of the cell along their length. Namely, the center or intersection of the cruciform blade passes along the length of space between the four adjacent corners of the four fuel bundles of the cell with the four projecting wings of cruciform blade each passing within the space between adjacent sides of two of the four symmetrically arranged square fuel bundles making up each cell. As such each cell comprises four spaced apart and symmetrically arranged fuel bundle units provided with a central control rod which due to the arrangement and configuration of the components serves a fuel core entity. The four fuel bundle unit cell with in between space for the cruciform control rod are held in location at their upper end by passing through a single rectangular opening in upper core grid. This type of control rod is illustrated, for example, in U.S. Letters Patent No. 3,397,759, issued August 20, 1968.

In accordance with conventional practice, the refueling of the fuel core comprising replacing of fuel bundle units, is carried out in a precise predetermined sequence and scheme normally entailing the removal of all four fuel bundles of a cell and in turn their replacement with four new or different fuel bundles. Moreover, since the refueling operation necessitates an opening of the reactor pressure vessel containing the fuel core, the reactor's neutron induced fission reaction obviously is shut down by means of inserting all or substantially all of the neutron absorbing control rods up through the fuel core in the spaces between the fuel bundle units of the numerous cells.

However, when fuel bundles are removed by lifting up out from the fuel core for subsequent replacement, the control rods extended up in the space between fuel bundles tend to list or tilt away from their designed vertical position because they are supported only at their base and the upper portion of the fuel rod is guided and confined solely by the presence of adjacent fuel bundles. Thus, upon the removal of the four fuel bundles units of a cell, the extended control rod for the cell routinely lists out of suitable alignment due to lack of adjacent support or confinement provided by the presence of fuel bundles. This misalignment of control rods commonly occurring during refueling, presents a substantial obstacle to replacing fuel bundles which must be lowered into position down through a vessel filled with water from a substantial distance above the fuel core with remotely operated means.

During refueling of a fuel core constructed with four fuel bundles unit cell design, the four fuel bundles are removed and refueling fuel bundles replaced in a sequence consisting of first lifting out two bundles diagonally opposite each other from the core then the other two bundles diagonally opposite each other. Introduction of the four replacement fuel bundles follows the same sequence, inserting two bundles into the core diagonally opposite each other, then the other two bundles diagonally opposite each other.

A variety of solutions for this refueling problem have been proposed or tried wit questionable success. For example, simulated fuel bundles in the form of full length channels have been employed. However, since it is typical to replace one quarter of all the fuel of the fuel core at each periodic refueling, the number of such channels needed is inordinate, entails excessive costs and significant storage problems due to their acquired radiation. Other potential measures have likewise presented difficulties and/or unacceptable costs.

### SUMMARY OF THE INVENTION

This invention comprises a unique tool for facilitating the replacement of fuel bundles in the fuel core of a water moderated and cooled nuclear fission reactor. The tool of the invention comprises a centering device for use to aptly position the upper portion of a cruciform control rod when replacing fuel bundles for refuelling in a four fuel bundle unit cell of the reactor fuel core.

It is an object of this invention to provide a centering tool for use in reloading fuel in nuclear fission reactors, which provides an effective and economical means for positioning control rods when replacing fuel bundles in a nuclear fission reactor.

The present invention provides a centering tool for positioning the upper end portion of a cruciform blade control rod lodged within a four fuel bundle unit cell of the fuel core of a water moderated and cooled nuclear fission reactor when exchanging fuel bundles within the cell during refuelling of the fuel core, the centering tool comprising the combination of a transverse plate having a lifting handle; two supporting blocks affixed to the transverse plate positioned below and along the length thereof, with each block having an outward projecting shoulder portion extending beyond an adjacent end of the transverse plate; and a cruciform blade suspended downward from each supporting block with the cruciform blades aligned symmetrically oblique to the transverse plate and said cruciform blades each having angled lower ends to facilitate entry down into a four unit cell of the fuel core containing a cruciform blade control rod.

### BRIEF DESCRIPTION OF THE DRAWING

Figure 1 is schematic illustration of a cross-section of a nuclear reactor fuel cell core of four fuel bundles and a cruciform control rod;
Figure 2 is an elevated side view of the centering tool of this invention; and
Figure 3 is a cross-sectional view of the centering tool of Figure 2 taken along lines 2-2; and
Figure 4 is a top plan view of Figure 2.

### DETAILED DESCRIPTION OF THE INVENTION

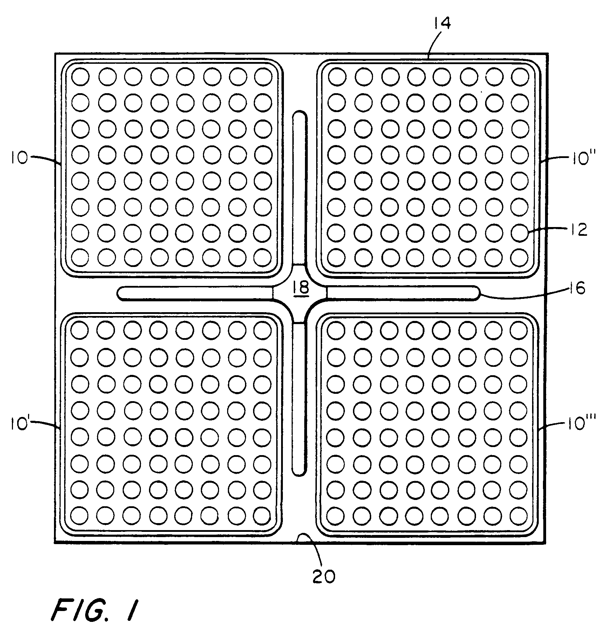

Referring to the drawings, specifically Figure 1, a typical cell of a boiling water nuclear fission reactor fuel core comprises four fuel bundles 10, 10′, 10˝ and 10‴ composed of a multiplicity of fuel containing tubes 12 containers, and possible open ended water rods, encircled within an open ended rectangular or square channel 14. The fuel bundles 10 are symmetrically arranged in a rectangular or square pattern spaced apart to provide adequate space there-between for entry of the four blades 16 of a cruciform control rod 18 to control the rate of the fission reaction or shut it down. The fuel bundles comprising the cell are helm in position adjacent to their upper end by passing through an apt opening in the upper core grid plate 20.

Refueling of such nuclear reactors commonly entails replacing one quarter of the total fuel charge with new fuel, and frequently rearranging retained fuel about within the fuel core. In any case, fuel is replaced or rearranged by changing all fuel bundles 10 of the cells involved in the process, such as the four bundles 10, 10′, 10˝ and 10˝′. The changing of the fuel bundles of a four unit cell typically follows a sequence of removing diagonally positioned bundles together and replacing them in the same sequence, namely first removing bundles 10 and 10˝′, then bundles 10′ and 10˝. Replacement would follow the reverse sequence of bundles 10′ and 10˝, the bundles 10 and 10˝′.

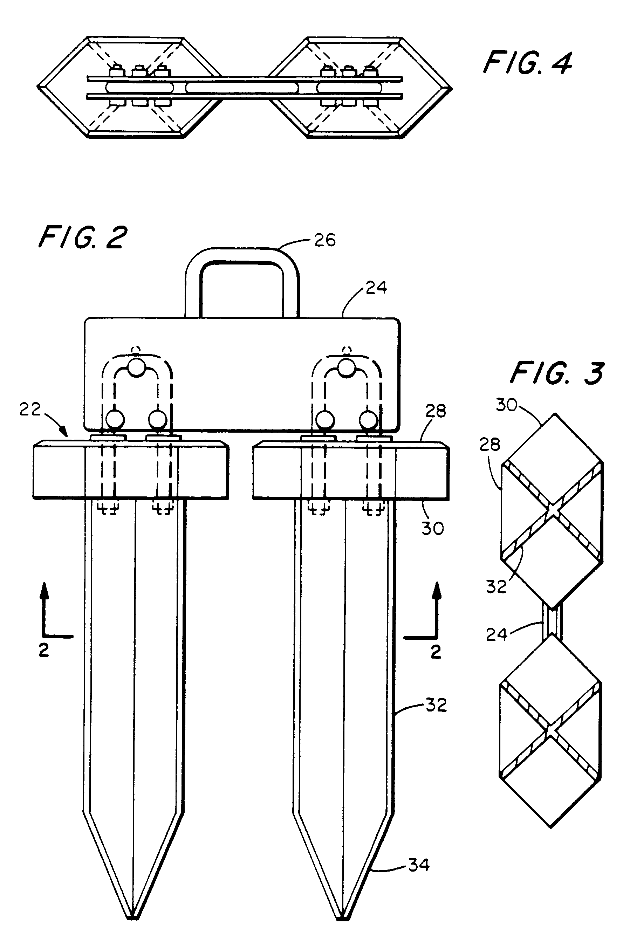

The control rod centering tool of this invention is shown in Figure 2 as tool 22. Centering tool 22 comprises a transverse plate 24 or bar having a handle 26, such as a bail, extending up therefrom for gripping and moving or installing the tool 22. Secured to the lower side of the plate 24 or bar are two support blocks 28 which can be affixed along the length of the elongated plate 24 by any suitable means such as bolts or welding.

Support blocks 28 are each provided with a shoulder portion 30 projecting outward to provide a means for bridging across the cell receiving opening in the upper core grid 20 of the fuel core and resting upon the grid for carrying or supporting the tool 22 extending over the grid opening.

A cruciform blade 32 is suspending down from each of the two support blocks 28. The cruciform blades 32 comprise four blade sections extending outward at about 90 degrees from each adjacent blade section and are obliquely aligned with the transverse plate 24 at an angle of about 45 degrees. Additionally, the lower downward directed end 34 of each cruciform blade 32 is angled to a center apex point to facilitate entry moving down into a four unit cell containing a cruciform blade control rod 18 for centering the control rod and thereby facilitating the replacement of fuel bundles 10 in a diagonal sequence. Preferably the point at the lower end of the cruciform blade is provided by all four blades of the cruciform control rod 18 being pointed at an acute angle.

In accordance with this invention, prior to replacing the fuel bundles of a given cell pursuant to a refueling operation, the centering tool 22 is lowered down by handle 26 so as to direct its pointed cruciform blades 32 to enter into the opening in the upper core grid 20 in a diagonal direction extending from one corner to the diagonally opposite corner. The centering tool 22 descends until the projecting shoulders 30 of supporting block 28 rest upon the upper core grid 20. Thus applied, the pointed cruciform blades 32 will wedge or nudge any list or misalignment of the cruciform control rod 18 into an apt central position thereby facilitating subsequent dropping the replacement fuel bundles in the prescribed sequence into position within the cell and about the control rod.

## Claims

1. A centering tool (22) for positioning the upper end portion of a cruciform blade control rod (18) lodged within a four fuel bundle (10-10‴) unit cell of the fuel core of a water moderated and cooled nuclear fission reactor when exchanging fuel bundles within the cell during refuelling of the fuel core, the centering tool (22) comprising the combination of :
a transverse plate (24) having a lifting handle (26);
two supporting blocks (28) affixed to the transverse plate (24) positioned below and along the length thereof, with each block (28) having an outward projecting shoulder portion (30) extending beyond an adjacent end of the transverse plate (24); and
a cruciform blade (32) suspended downward from each supporting block (28) with the cruciform blades aligned symmetrically oblique to the transverse plate (24) and said cruciform blades (32) each having angled lower ends (34) to facilitate entry down into a four unit cell of the fuel core containing a cruciform blade control rod.

2. A centering tool according to Claim 1, wherein the lower ends (34) of the downward suspended cruciform blades (32) are angled at an acute angle.

3. A centering tool according to Claim 1, wherein the transverse plate (24) is provided with an upward projecting bail lifting handle (26) for moving and applying the tool.

4. A centering tool according to Claim 1, wherein the cruciform blades (32) suspended downward from each supporting block (28) are symmetrically obliquely aligned with the transverse plate (24) at an angle of about 45 degrees.

## Patentansprüche

1. Zentrierwerkzeug (22) zum Positionieren des oberen Endabschnittes von einem kreuzschaufelförmigen Steuerstab (18), der in einer vier Brennstoffbündel (10-10‴) aufweisenden Einheitszelle von dem Brennstoffkern eines wassermoderierten und -gekühlten Kernspaltreaktors ausgetauscht werden, wenn Brennstoffbündel innerhalb der Zelle während der Brennstoffaufnahme des Brennstoffkerns untergebracht sind, wobei das Zentrierwerkzeug (22) die Kombination enthält von:
einer Querplatte (24) mit einem Hebegriff (26);
zwei Halterungsblöcken (28), die an der Querplatte (24) befestigt sind, die unten und entlang der Länge davon angeordnet ist, wobei jeder Block einen äußeren vorstehenden Schulterabschnitt (30) aufweist, der sich über ein benachbartes Ende der Querplatte (24) hinaus erstreckt; und
eine kreuzförmige Schaufel (32), die von jedem Halterungsblock (28) nach unten hängt, wobei die kreuzförmigen Schaufeln symmetrisch schräg zu der Querplatte (24) ausgerichtet sind und die kreuzfömigen Schaufeln (32) jeweils gewinkelte untere Enden (34) aufweisen, um den Eintritt nach unten in eine Vierer-Einheitszelle des Brennstoffkerns zu erleichtern, der einen kreuzschaufelförmigen Steuerstab enthält.

2. Zentrierwerkzeug nach Anspruch 1, wobei die unteren Enden (34) der nach unten aufgehängten kreuzfömigen Schaufeln (32) unter einem spitzen Winkel zusammenlaufen.

3. Zentrierwerkzeug nach Anspruch 1, wobei die Querplatte (24) mit einem nach oben vorstehenden bügelförmigen Hebegriff (26) zum Bewegen und Handhaben des Werkzeuges versehen ist.

4. Zentrierwerkzeug nach Anspruch 1, wobei die kreuzfömigen Schaufeln (32), die von jedem Halterungsblock (28) nach unten hängen, unter einem Winkel von etwa 45° mit der Querplatte (24) symmetrisch schräg ausgerichtet sind.

## Revendications

1. Outil de centrage (22) pour positionner la partie d'extrémité supérieure d'une barre de commande (18) formée par une lame cruciforme et logée à l'intérieur d'une cellule d'un ensemble de quatre assemblages combustibles (10-10‴) du coeur d'un réacteur de fission nucléaire, modéré et refroidi par de l'eau, quand on échange les assemblages combustibles dans une cellule pendant le réapprovisionnement du coeur combustible, cet outil de centrage (22) comprenant la combinaison consistant en :
une plaque transversale (24) comportant une poignée de levage (26);
deux blocs de support (28) fixés à la plaque transversale (24) positionnée en dessous et le long de ces blocs dans leur direction longitudinale, chaque bloc (28) comportant une partie épaulement (30) faisant saillie vers l'extérieur et s'étendant au-delà d'une extrémité adjacente de la plaque transversale (24); et
une lame cruciforme (32) suspendue, en direction du bas, à chaque bloc de support (28), les lames cruciformes étant alignées de façon symétrique obliquement par rapport à la plaque transversale (24) et lesdites lames cruciformes (32) comportant chacune des extrémités inférieures inclinées (34) pour faciliter leur entrée en direction du bas dans une cellule d'un ensemble à quatre assemblages du coeur combustible contenant une barre de commande à lame cruciforme.

2. Outil de centrage selon la revendication 1, dans lequel les extrémités inférieures (34) des lames cruciformes (34) suspendues, en direction du bas, sont inclinées suivant un angle aigu.

3. Outil de centrage selon la revendication 1, dans lequel la plaque transversale (24) est pourvue d'une poignée de levage (26) en forme d'anse pour déplacer et appliquer l'outil.

4. Outil de centrage selon la revendication 1, dans lequel les lames cruciformes (32) suspendues, en direction du bas, à chaque bloc de support (28) sont alignées de façon symétrique et oblique avec la plaque transversale (24) suivant un angle d'environ 45 degrés.
